(19) Europäisches Patentamt

European Patent Office

Office européen des brevets

(11) Veröffentlichungsnummer: **0 265 737 B1**

(12) **EUROPÄISCHE PATENTSCHRIFT**

(45) Veröffentlichungstag der Patentschrift: **01.07.92**

(21) Anmeldenummer: **87114723.7**

(22) Anmeldetag: **08.10.87**

(51) Int. Cl.⁵: **H01H 33/00**, H01B 17/00, G02B 6/44

(54) **Lichtleiteranordnung bei einem Hochspannungsisolator.**

(30) Priorität: **24.10.86 CH 4243/86**

(43) Veröffentlichungstag der Anmeldung:
**04.05.88 Patentblatt 88/18**

(45) Bekanntmachung des Hinweises auf die Patenterteilung:
**01.07.92 Patentblatt 92/27**

(84) Benannte Vertragsstaaten:
**CH DE FR GB LI SE**

(56) Entgegenhaltungen:
DE-A- 2 901 872     DE-A- 3 207 306
DE-A- 3 426 536     FR-A- 1 357 749
FR-A- 2 258 633     US-A- 3 485 940

(73) Patentinhaber: **BBC Brown Boveri AG
Haselstrasse
CH-5401 Baden(CH)**

(72) Erfinder: **Maschek, Martin
Florastrasse 33
CH-8116 Würenlos(CH)**
Erfinder: **Mastner, Georg, Dr.
Loonstrasse 5
CH-5443 Niederrohrdorf(CH)**
Erfinder: **Tomic, Branko
Lehmäcker 10
CH-5422 Oberehrendingen(CH)**

Rank Xerox (UK) Business Services

## Beschreibung

Bei der Erfindung wird ausgegangen von einer Lichtleiteranordnung bei einem Hochspannungsisolator nach dem Oberbegriff der Patentansprüche 1 und 7 bis 9.

Aus der DE-A1-32 07 306 ist eine Lichtleiteranordnung bei einem Hochspannungsisolator bekannt, welche mindestens einen Lichtleiter aufweist, welcher von einer Hochspannungsseite des Hochspannungsisolators zu dessen Niederspannungsseite führt. Hierbei dient der Hochspannungsisolator selbst als Lichtleiterträger. Entlang der Oberfläche des Hochspannungsisolators ist eine spiralförmige Rille vorgesehen, in welche der Lichtleiter eingekittet ist. Die Herstellung einer derartigen Rille ist vergleichsweise aufwendig. Das Einkitten des Lichtleiters in die Rille muss manuell erfolgen, so dass sich schädliche Lufteinschlüsse in der Rille nicht vermeiden lassen. Biegebelastungen des Hochspannungsisolators wirken voll auf den starr eingekitteten Lichtleiter ein, der gegenüber mechanischen Beanspruchungen in der Regel nicht widerstandsfähig ist.

Aus der FR-A-2 258 633 ist eine Lichtleiterführung innerhalb eines Hochspannungsisolators bekannt. Dieser Lichtleiter ist etwas länger ausgebildet als die Höhe des Hochspannungsisolators, genaue Angaben über seine Länge und auch über seine Anordnung sind nicht zu entnehmen.

Aus der DE-A1-34 26 536 ist eine Lichtleiteranordnung bei einem Hochspannungsisolator bekannt. Dort werden Lichtwellenleiter mechanisch geschützt, geradlinig und ungewendelt an einem kreiszylindrischen Trägerelement mit elektrisch begrenzt leitfähiger Oberfläche fixiert. Das Trägerelement ist fest an einer mit einem Isoliermittel gefüllten Isolatorsäule angeordnet. Die Lichtwellenleiter sind hermetisch dicht durch die Isolatorsäule geführt. Eine Wendelung des Lichtwellenleiters wird dort aus mechanischen und übertragungstechnischen Gründen als nachteilig angesehen.

Die Erfindung, wie sie in den Ansprüchen gekennzeichnet ist, löst die Aufgabe, eine Lichtleiteranordnung bei einem Hochspannungsisolator anzugeben, bei welcher der Spannungsgradient längs des Lichtleiters zwischen der Hochspannungsseite und der Erdpotentialseite des Hochspannungsisolators verringert ist und welche einfach herzustellen ist.

Ein Vorteil der Erfindung besteht darin, dass die üblicherweise geringere Spannungsfestigkeit des Lichtleiters im Vergleich zu der des Hochspannungsisolators durch die grössere Länge des Lichtleiters kompensiert wird. Bei Verwendung von Glasfasern für die Lichtleiter sind Dämpfungsverluste im Uebertragungsweg durch den Hochspannungsisolator vernachlässigbar. Ein Vorteil der Wendel besteht darin, dass deren endseitige Abschlüsse mehrere Funktionen erfüllen können. Im oberen Abschluss bzw. Endverschlussbehälter kann ein für die hochspannungführende Baugruppe ausreichend langer Lichtleiter mit Lichtleiterstecker untergebracht werden. Im unteren Abschluss bzw. Klemmkasten können Kopplungen für den faseroptischen Ausgang der hochspannungführenden Baugruppe angebracht sein.

Der Vorteil eines längeren Oberflächenkriechweges gemäss Anspruch 2 besteht darin, dass der Spannungsgradient stärker reduziert ist.

Die Aussparung bzw. Rille in der Wendel gemäss Anspruch 4 und die hohle Wendel gemäss Anspruch 5 gewährleisten eine gute und lagestabile Führung des Lichtleiters.

Bei Verwendung eines flexiblen Rohres als Wendel gemäss Anspruch 6 besteht die Möglichkeit, eine universelle Lichtleiterführung auf die gewünschte Länge der Wendel zu ziehen. Eine selbsttragende Wendel ohne vertikale Abstützungen hat bei belüftetem Hochspannungsisolator den Vorteil einer grösseren Ueberschlagsfestigkeit.

Ein Vorteil der Einbettung des Lichtleiters im Isolatorrohr gemäss Anspruch 7 besteht darin, dass dies bei der Herstellung des Isolatorrohres geschieht, so dass der Lichtleiter in einer der oberen Schichten des Isolatorrohres spiralförmig von einem zum anderen Ende des Isolatorrohres geführt ist.

Die Einbettung des Lichtleiters in einer zusätzlichen Silikonschicht auf dem Isolatorrohr gemäss Anspruch 8 hat den Vorteil, dass der tragende Querschnitt des Isolatorrohres nicht verkleinert wird.

Ein Vorteil der Lichtleiter-Aussparung in der Silikonschicht gemäss Anspruch 9 besteht darin, dass der Lichtleiter nachträglich eingezogen werden kann.

Die Lichtleiter-Aussparung an der Unterseite des Silikonschirmes gemäss Anspruch 10 ermöglicht ein einfaches Eindrücken des Lichtleiters mit Selbsthalteeffekt nach Fertigstellung des Hochspannungsisolators.

Die Ausgestaltungen der Erfindug gemäss den Ansprüchen 7 bis 9 haben den gemeinsamen Vorteil, dass der Lichtleiter nicht mit im Innern des Hochspannungsisolators vorhandenem Medium (Oel, Schwefelhexafluorid $SF_6$, Schaum) in Kontakt kommt. Die axiale Spannungsbeanspruchung ist durch die Steigung der Wickelspirale steuerbar. Es gibt keine lichtleiterbedingten Uebergänge in den Innenraum des Hochspannungsisolators, welche Dichtigkeitsprobleme aufwerfen könnten. Gemäss den Ansprüchen 7 bis 9 besteht zudem der gemeinsame Vorteil, dass der Lichtleiter durch die glasfaserverstärkte Kunststoff- und Silikonschicht gegen äussere Einflüsse, wie Feuchtigkeit und mechanische Beschädigung, geschützt ist.

Kurze Beschreibung der Zeichnungen

Die Erfindung wird nachstehend anhand von Ausführungsbeispielen erläutert. Es zeigen:

Fig. 1 eine Stromwandleranordnung für eine Hochspannungsfreiluftanlage mit einer selbsttragenden Wendel im Hohlraum des Hochspannungsisolators,

Fig. 2 einen Abschnitt einer Wendel gemäss Fig. 1 mit daraufgewikkeltem Lichtleiter,

Fig. 3 einen Abschnitt einer Wendel gemäss Fig. 1 im Querschnitt mit U-förmiger Rille zur Aufnahme eines Lichtleiters,

Fig. 4 einen Abschnitt einer schlauchförmigen Wendel gemäss Fig. 1 mit einem Lichtleiter im Innern,

Fig. 5 ausschnittsweise einen Querschnitt durch einen Hochspannungsisolator gemäss Fig. 1 mit einem Isolatorrohr, darin eingebetteten Lichtleitern, einer aussen aufgebrachten Silikonschicht mit Silikonschirmen und mit einem Hochspannungsflansch,

Fig. 6 ausschnittsweise einen Querschnitt durch einen Hochspannungsisolator gemäss Fig. 1, bei dem die Lichtleiter auf das Isolatorrohr gewickelt sind,

Fig. 7 ausschnittsweise einen Querschnitt durch einen Hochspannungsisolator gemäss Fig. 1 mit einem Isolatorrohr und einer darauf angebrachten Silikonschicht mit darin eingebetteten Lichtleitern,

Fig. 8 und 9 ausschnittsweise einen Querschnitt durch einen Hochspannungsisolator gemäss Fig. 1 mit einem Isolatorrohr und einem darauf aufgewickelten Silikonschirmband mit Lichtleiteranordnungen gemäss den Figuren 6 bzw. 7,

Fig. 10 ausschnittsweise einen Querschnitt durch einen Hochspannungsisolator gemäss Fig. 1 mit einer längs der Oberfläche des Isolatorrohres spiralförmig verlaufenden Aussparung zur Aufnahme von Lichtleitern und

Fig. 11 ausschnittsweise einen Querschnitt durch einen Hochspannungsisolator gemäss Fig. 1 mit Aussparungen an den Unterseiten der Silikonschirme zur klemmenden Aufnahme eines Lichtleiters.

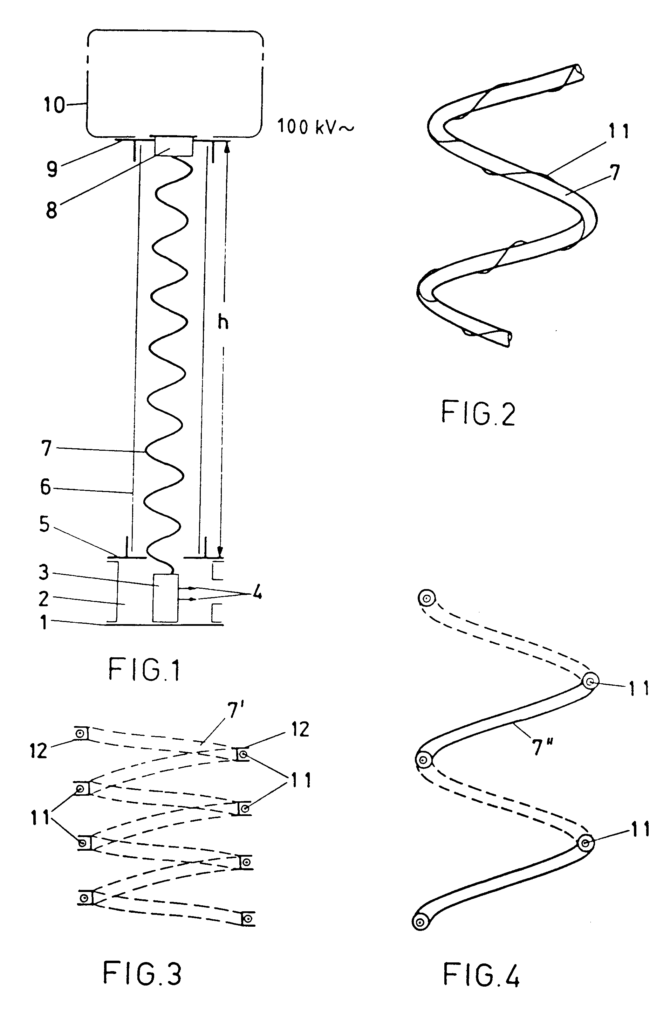

In Fig. 1 ist mit 6 ein vertikaler, rohrförmiger, luftgefüllter bzw. belüfteter Hochspannungsisolator aus Keramik oder glasfaserverstärktem Kunststoff bezeichnet, der über einen auf Erdpotential befindlichen, metallischen Bodenflansch 5 auf einem Sokkel 2 mit einer Bodenplatte 1 im Freien steht. Am oberen Ende ist der Hochspannungsisolator 6 durch einen metallischen Hochspannungsflansch 9 abgeschlossen, welcher eine hochspannungführende Baugruppe 10, vorzugsweise ein Wandlerkopfgehäuse mit einem Stromwandler trägt. Im Hohlraum des Hochspannungsisolators 6 befindet sich eine selbsttragende Wendel 7 aus einem elektrisch gut isolierenden Kunststoff, die unten auf einem Klemmkasten 3 mit Lichtleiterkupplungen 4 abgestützt ist. Am oberen Ende der Wendel 7 ist ein Endverschlussbehälter 8 zur Befestigung der Wendel am Hochspannungsisolator 6 und zur Aufnahme von einem Lichtleiter oder Lichtleiterkabel mit mehreren Lichtleitern vorgesehen. Am Ende der Lichtleiter sind Lichtleiterstecker montiert zur Ankopplung der Lichtleiter an eine nicht dargestellte Elektronik der hochspannungführenden Baugruppe 10. Um eine hohe Ueberschlagfestigkeit zu gewährleisten, weist die Wendel 7 keine vertikale Abstützungen auf.

Die Wendel 7 kann, wie aus Fig. 2 ersichtlich, einen kreisförmigen Querschnitt aufweisen. Um die Wendel 7 ist mit grosser Steigung ein elektrisch isolierendes Lichtleiterkabel mit mehreren Glasfasern oder ein oder mehrere nicht verkabelte Glasfaser-Lichtleiter 11 gewickelt, wobei die Länge des Lichtleiters 11 innerhalb einer Höhe h des Hochspannungsisolators 6 vorzugsweise gleich 10 • h beträgt. Dadurch wird die Spannungsbeanspruchung des Lichtleiters 11 im Verhältnis 1 : 10 herabgesetzt und erreicht, dass der Spannungsgradient längs des Lichtleiters 11 ausreichend klein ist. Der Lichtleiter 11 überträgt von der hochspannungführenden Baugruppe 10 generierte Informationen in Form von Lichtimpulsen in einen nicht dargestellten, geschützten Messraum auf Erdpotential, bzw. Befehle in der umgekehrten Richtung.

Anstelle einer Wendel 7 mit rundem Profil kann auch eine Wendel 7' mit U-förmigem Profil 12 vewendet werden, wie in Fig. 3 angedeutet. Dabei ist der Lichtleiter 11 in die Längsrille dieses U-förmigen Profils 12 hineingelegt.

Es kann auch eine rohrförmige Wendel 7'' verwendet werden, vgl. Fig. 4, in welche der Lichtleiter 11 eingezogen werden kann. Das Rohr der Wendel 7'' soll nicht hermetisch dicht sein, um einen Mediumaustausch (Gas, Luft) zwischen dem Innenraum des Hochspannungsisolators 6 und dem Hohlraum der Wendel 7" zu gewährleisten.

Die Wendel 7 bzw. 7', 7" mit Klemmkasten 5 und Endverschlussbehälter 8 bilden eine separate Baueinheit, die in den fertigen Hochspannungsisolator 6 montiert wird. Der Hochspannungsisolator 6 kann damit aus mehreren vorgefertigten Teilstücken mit nicht dargestellten Zwischenflanschen bestehen, ohne dass Probleme der Kontinuität der Lichtleiterführung auftreten. Bei Verwendung einer Wendel 7 bzw. 7', 7" aus einem flexiblen Werkstoff besteht die Möglichkeit, eine universelle Lichtleiterführung auf die gewünschte Länge der Wendel zu ziehen.

Es versteht sich, dass der Hochspannungsisolator 6 bei Bedarf auch hermetisch abgedichtet und mit einem Isoliergas, wie Stickstoff oder Schwefelhexafluorid $SF_6$, gefüllt sein kann.

Dabei schliesst der Bodenflansch 5 mit dem Klemmkasten 3 und der Hochspannungsflansch 9 mit dem Endverschlussbehälter 8 hermetisch dicht ab.

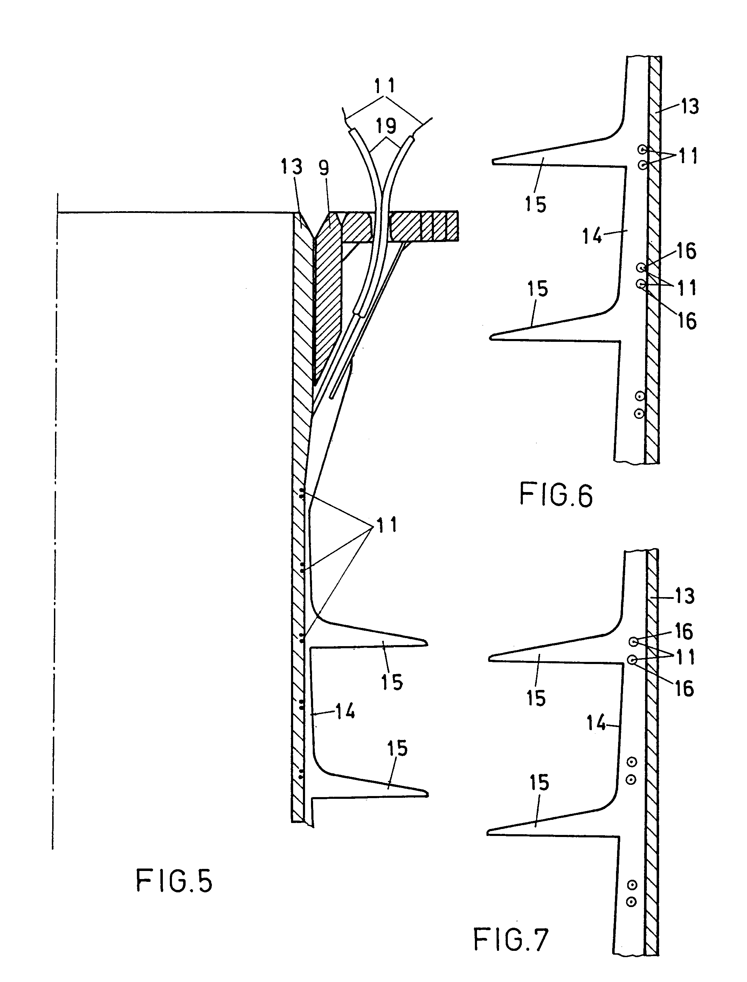

Fig. 5 zeigt ausschnittweise einen Hochspannungsisolator 6 gemäss Fig. 1 mit einem Isolatorrohr 13 aus glasfaserverstärktem Kunststoff, in dessen Aussenschicht während der Herstellung des Isolatorrohres 2 Lichtleiter 11 spiralförmig eingebettet und von einem zum anderen Ende des Isolatorrohres geführt sind.

Die Austrittsstellen der Lichtleiter 11 führen nahe an dem unteren bzw. oberen bzw. Hochspannungsflansch 9 nach aussen. Die freien Enden der Lichtleiter 11 sind vorzugsweise durch elektrisch isolierende Entlastungsschläuche 19 geschützt durch Oeffnungen im unteren bzw. oberen Flansch 9 geführt und endseitig mit nicht dargestellten Lichtleitersteckern versehen. Der kurze Uebergang der Lichtleiter 11 vom Isolatorrohr 13 in den Flansch 9 wird bei der Beschirmung des Isolatorrohres 13 mit einer Silikonschicht 14, die Silikonschirme 15 zur Verlängerung eines gestrichelt angedeuteten Oberflächenkriechweges k aufweist, zugedeckt.

Bei den Ausführungsarten gemäss den Figuren 6 und 7 sind Lichtleiterkabel 16 mit darin befindlichen Lichtleitern 11 entweder aussen auf das Isolatorrohr 13 spiralförmig aufgewickelt und anschliessend eingebettet in die aufgegossene Silikonschicht 14 (Fig. 6) oder von der Silikonschicht 14 voll umhüllt (Fig. 7).

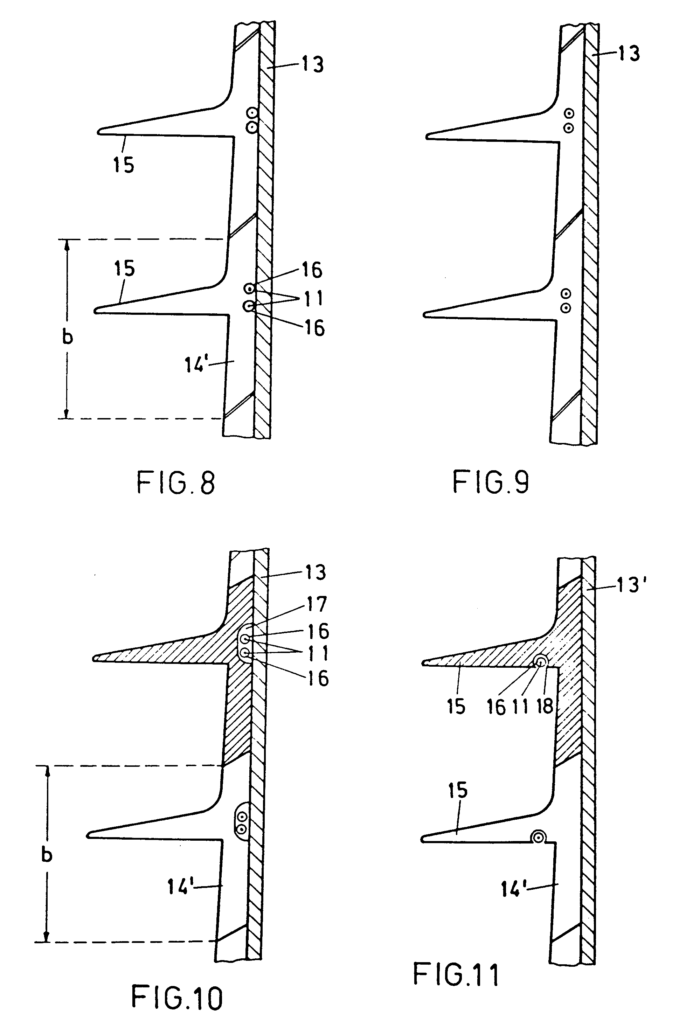

Bei den Ausführungsarten gemäss den Figuren 8 und 9 sind Lichtleiterkabel 16 mit Lichtleitern 11 in ein endloses Silikonschirmband 14 eingebettet, welches spiralförmig auf das Isolatorrohr 13 aufgewickelt wird, und zwar so, dass das Lichtleiterkabel entweder am Isolatorrohr 13 anliegt (Fig. 8) oder vom Silikon voll umhüllt ist (Fig. 9). Das Silikonschirmband 14' weist eine Breite b und einen Silikonschirm 15 auf.

Bei der Ausführung gemäss Fig. 10 sind zwei Lichtleiterkabel 16 mit Lichtleitern 11 nachträglich in eine Aussparung 17 im Silikonschirmband 14', angrenzend an die Oberfläche des Isolatorrohres 13, eingezogen.

Bei der Ausführung gemäss Fig. 11 ist ein Lichtleiterkabel 16 mit einem Lichtleiter 11 nach dem Aufwickeln des Silikonschirmbandes 14' in eine Aussparung 18 an der Unterseite des Silikonschirmes 15 eingedrückt, in der es durch Selbsthalteeffekt gehalten wird.

Bei den o.g. Ausführungen ist die Lichtleiterführung lagemässig sehr wohl definiert und reproduzierbar. Die axiale Spannungsbeanspruchung ist durch die Steigung der Wickelspirale steuerbar. Die weniger gut definierte Geometrie der Lichtleiterführung in der Nähe der Flansche 5 und 9 ist bereits in einer Zone, in welcher der Spannungsgradient durch äussere Steuerelektroden auf einen geringen Wert reduziert wurde. Durch die spiralförmige Führung wird der Lichtleiter 11 auch bei starken Biegungen des Isolators nur sehr wenig mechanisch beansprucht.

Bei allen Varianten gemäss den Figuren 5 bis 11 ist es auch möglich, statt des Lichtleiters 11 ein Rohr aus elektrisch isolierendem Material im glasfaserverstärkten Kunststoff oder im Silikon einzubetten und den Lichtleiter 11 erst nach der Fertigstellung des Hochspannungsisolators 6 einzuziehen.

Die Verwendung von einem Rohr bringt zusätzlich folgende Vorteile:

- der Lichtleiter 11 ist keinen hohenTemperaturen bei herstellungsbedingten thermischen Behandlungen des Isolatorrohres 13 ausgesetzt,
- der Lichtleiter 11 kann ausgewechselt werden,
- man kann einen zusätzlichen Lichtleiter 11 einziehen,
- der Lichtleiter 11 ist im Rohr noch besser geschützt,
- der Raum um den Lichtleiter 11 kann belüftet werden,
- der Lichtleiter ist keinen mechanischen Spannungen ausgesetzt.

**Patentansprüche**

1. Lichtleiteranordnung bei einem Hochspannungsisolator (6), insbesondere für einen Stromwandler einer Hochspannungsfreiluftanlage, mit mindestens einem Lichtleiter (11), der von einer Hochspannungsseite des Hochspannungsisolators (6) zu dessen Niederspannungsseite führt, wobei der mindestens eine Lichtleiter (11) spiralförmig längs eines Lichtleiterträgers geführt ist, dadurch gekennzeichnet,

- dass der Lichtleiterträger entlang des Lichtleiters einen Oberflächenkriechweg aufweist, dessen Länge grösser als die 1,5-fache Höhe (h) des Hochspannungsisolators (6) ist, und
- dass der Lichtleiterträger als isolierende Wendel (7, 7', 7") ausgebildet ist, die sich im Hohlraum des Hochspannungsisolators (6) befindet und den mindestens einen Lichtleiter (11) lagestabil führt.

2.   Lichtleiteranordnung nach Anspruch 1, dadurch gekennzeichnet, dass der Lichtleiterträger entlang des Lichtleiters einen Oberflächenkriechweg aufweist, dessen Länge grösser als die 5-fache Höhe (h) des Hochspannungsisolators (6) ist.

3.   Lichtleiteranordnung nach einem der Ansprüche 1 oder 2, dadurch gekennzeichnet,

- dass der Lichtleiter (11) mit grosser Steigung um die isolierende Wendel (7) gewickelt ist.

4.   Lichtleiteranordnung nach Anspruch 1 oder 2, dadurch gekennzeichnet,

- dass längs der isolierenden Wendel (7') mindestens eine Rille (12) zur Aufnahme mindestens eines Lichtleiters (11) vorgesehen ist.

5.   Lichtleiteranordnung nach einem der Ansprüche 1 oder 2, dadurch gekennzeichnet,

- dass die isolierende Wendel (7") hohl ausgebildet ist, und
- dass im Hohlraum der Wendel (7") mindestens ein Lichtleiter (11) angeordnet ist.

6.   Lichtleiteranordnung nach einem der Ansprüche 1 bis 5, dadurch gekennzeichnet,

- dass die isolierende Wendel (7, 7', 7") aus einem elastischen Werkstoff besteht, und
- insbesondere, dass die isolierende Wendel (7, 7', 7") selbsttragend ist.

7.   Lichtleiteranordnung bei einem Hochspannungsisolator (6), insbesondere für einen Stromwandler einer Hochspannungsfreiluftanlage, mit mindestens einem Lichtleiter (11), der von einer Hochspannungsseite des Hochspannungsisolators (6) zu dessen Niederspannungsseite führt, wobei der mindestens eine Lichtleiter (11) spiralförmig längs eines Lichtleiterträgers geführt ist, dadurch gekennzeichnet,

- dass der Lichtleiterträger entlang des Lichtleiters einen Oberflächenkriechweg aufweist, dessen Länge grösser als die 1,5-fache Höhe (h) des Hochspannungsisolators (6) ist,
- dass der Lichtleiterträger als Isolatorrohr (13) aus glasfaserverstärktem Kunststoff ausgebildet ist,
- dass der mindestens eine Lichtleiter (11) in dieses Isolatorrohr (13) eingebettet und
- spiralförmig wenigstens bis in die Nähe der beiden Enden (5, 9) des Hochspannungsisolators (6) geführt ist, und
- insbesondere, dass der mindestens eine Lichtleiter (11) in einer äusseren Schicht des Isolatorrohres (13) eingebettet ist.

8.   Lichtleiteranordnung bei einem Hochspannungsisolator (6), insbesondere für einen Stromwandler einer Hochspannungsfreiluftanlage, mit mindestens einem Lichtleiter (11), der von einer Hochspannungsseite des Hochspannungsisolators (6) zu dessen Niederspannungsseite führt, wobei der mindestens eine Lichtleiter (11) spiralförmig längs eines Lichtleiterträgers geführt ist, dadurch gekennzeichnet,

- dass der Lichtleiterträger entlang des Lichtleiters einen Oberflächenkriechweg aufweist, dessen Länge grösser als die 1,5-fache Höhe (h) des Hochspannungsisolators (6) ist,
- dass der Lichtleiterträger als Silikonschicht (14) mit in vertikalem Abstand voneinander beabstandeten Silikonschirmen (15) oder als Silikonschirmband (14') mit Silikonschirmen (15) ausgebildet ist, welche ein Isolatorrohr (13) aus glasfaserverstärktem Kunststoff des Hochspannungsisolators umgibt, und
- dass zwischen der Aussenwand des Isolatorrohres (13) und der Silikonschicht (14) oder dem Silikonschirmband (14') längs des Isolatorrohres (13) mindestens eine Aussparung (17) zur Aufnahme des mindestens einen Lichtleiters (11) vorgesehen ist.

9.   Lichtleiteranordnung bei einem Hochspannungsisolator (6), insbesondere für einen Stromwandler einer Hochspannungsfreiluftanlage, mit mindestens einem Lichtleiter (11), der von einer Hochspannungsseite des Hochspannungsisolators (6) zu dessen Niederspannungsseite führt, wobei der mindestens eine Lichtleiter (11) spiralförmig längs eines Lichtleiterträgers geführt ist, dadurch gekennzeichnet,
- dass der Lichtleiterträger entlang des
Lichtleiters einen Oberflächenkriechweg
aufweist, dessen Länge grösser als die
1,5-fache Höhe (h) des Hochspannungsisolators (6) ist,
- dass der Lichtleiterträger als Silikonschicht (14) mit in vertikalem Abstand
voneinander beabstandeten Silikonschirmen (15) oder als Silikonschirmband
(14') mit Silikonschirmen (15) ausgebildet
ist, welche ein Isolatorrohr (13) aus glasfaserverstärktem Kunststoff des Hochspannungsisolators umgibt, und
- dass an der Unterseite der Silikonschirme (15) mindestens eine Aussparung
(18) vorgesehen ist, in welche mindestens ein Lichtleiter (11) von unten her
eingedrückt werden kann.

## Claims

1. Optical waveguide arrangement for a high-voltage insulator (6), particularly for a current transducer of a high-voltage outdoor installation,
comprising at least one optical waveguide (11)
which leads from a high-voltage side of the
high-voltage insulator (6) to its low-voltage
side, the at least one optical waveguide (11)
being spirally conducted along an optical
waveguide support, characterised in that
- the optical waveguide support along the
optical wave-guide exhibits a surface
leakage path the length of which is greater than 1.5 times the height (h) of the
high-voltage insulator (6), and
- the optical waveguide support is formed
as an insulating coil (7, 7', 7") which is
located in the cavity of the high-voltage
insulator (6) and guides the at least one
optical waveguide (11) in a positionally
stable manner.

2. Optical waveguide arrangement according to
Claim 1, characterised in that the optical
waveguide support exhibits a surface leakage
path along the optical wave-guide the length of
which is greater than 5 times the height (h) of
the high-voltage insulator (6).

3. Optical waveguide arrangement according to
one of Claims 1 or 2, characterised in that
- the optical waveguide (11) is wound around the insulating coil (7) with a steep
pitch.

4. Optical waveguide arrangement according to
Claim 1 or 2, characterised in that
- at least one groove (12) is provided
along the insulating coil (7') for accommodating at least one optical waveguide
(11).

5. Optical waveguide arrangement according to
one of Claims 1 or 2, characterised in that
- the insulating coil (7") is hollow, and
- at least one optical waveguide (11) is
arranged in the cavity of the coil (7").

6. Optical waveguide arrangement according to
one of Claims 1 to 5, characterised in that
- the insulating coil (7, 7', 7") consists of
an elastic material, and
- in particular, the insulating coil (7, 7', 7")
is self-supporting.

7. Optical waveguide arrangement for a high-voltage insulator (6), particularly for a current transducer of a high-voltage outdoor installation,
comprising at least one optical waveguide (11)
which leads from a high-voltage side of the
high-voltage insulator (6) to its low-voltage
side, the at least one optical waveguide (11)
being spirally conducted along an optical
waveguide support, characterised in that
- the optical waveguide support along the
optical wave-guide exhibits a surface
leakage path the length of which is greater than 1.5 times the height (h) of the
high-voltage insulator (6),
- the optical waveguide support is formed
as an insulator tube (13) of fibre-glass-
reinforced plastic,
- the at least one optical waveguide (11) is
embedded in this insulator tube and
- conducted spirally at least into the vicinity of the two ends (5, 9) of the high-
voltage insulator (6), and
- in particular, the at least one optical
waveguide (11) is embedded into an outer layer of the insulator tube (13).

8. Optical waveguide arrangement for a high-voltage insulator (6), particularly for a current transducer of a high-voltage outdoor installation,
comprising at least one optical waveguide (11)
which leads from a high-voltage side of the
high-voltage insulator (6) to its low-voltage
side, the at least one optical waveguide (11)
being spirally conducted along an optical
waveguide support, characterised in that
- the optical waveguide support along the
optical wave-guide exhibits a surface
leakage path the length of which is greater than 1.5 times the height (h) of the high-voltage insulator (6),

- the optical waveguide support is formed as a silicon layer (14) with silicon shields (15) spaced apart from one another at a vertical distance or as a silicon shield tape (14') with silicon shields (15) which are surrounded by an insulator tube (13) of fibre-glass-reinforced plastic of the high-voltage insulator, and

- between the outside wall of the insulator tube (13) and the silicon layer (14) or the silicon shield tape (14') along the insulator tube (13) at least one recess (17) for accommodating the at least one optical waveguide (11) is provided.

9. Optical waveguide arrangement for a high-voltage insulator (6), particularly for a current tranzducer of a high-voltage outdoor installation, comprising at least one optical waveguide (11) which leads from a high-voltage side of the high-voltage insulator (6) to its low-voltage side, the at least one optical waveguide (11) being spirally conducted along an optical waveguide support, characterised in that

- the optical waveguide support along the optical wave-guide exhibits a surface leakage path the length of which is greater than 1.5 times the height (h) of the high-voltage insulator (6),

- the optical waveguide support is formed as a silicon layer (14) with silicon shields (15) spaced apart from one another at a vertical distance or as a silicon shield tape (14') with silicon shields (15) which are surrounded by an insulator tube (13) of fibre-glass-reinforced plastic of the high-voltage insulator, and

- at least one recess (18), into which at least one optical waveguide (11) can be pressed from underneath is provided on the underside of the silicon shields (15).

**Revendications**

1. Montage de guides optiques dans un isolateur haute tension (6), en particulier un isolateur destiné à un transformateur de courant d'une installation haute tension pour l'extérieur, comportant au moins un guide optique (11) qui va d'un côté haute tension de l'isolateur haute tension (6) à son côté basse tension, ledit au moins un guide optique (11) étant guidé en hélice le long d'un support de guide optique, caractérisé en ce que

- le support de guide optique présente, le long du guide optique, une distance de fuite superficielle dont la longueur est supérieure à 1,5 fois la hauteur (h) de l'isolateur haute tension (6), et

- le support de guide optique a la forme d'une hélice isolante (7, 7', 7") qui se trouve dans l'espace creux de l'isolateur haute tension (6) et qui guide ledit au moins un guide optique (11) d'une manière stable en position.

2. Montage de guides optiques suivant la revendication 1, caractérisé en ce que

- le support de guide optique présente, le long du guide optique, une distance de fuite superficielle dont la longueur est supérieure à 5 fois la hauteur (h) de l'isolateur haute tension (6).

3. Montage de guides optiques suivant la revendication 1 ou 2, caractérisé en ce que

- le guide optique (11) est enroulé autour de l'hélice isolante (7) suivant un long pas.

4. Montage de guides optiques suivant la revendication 1 ou 2, caractérisé en ce que

- le long de l'hélice isolante (7'), au moins une rainure (12) est prévue pour recevoir au moins un guide optique (11).

5. Montage de guides optiques suivant la revendication 1 ou 2, caractérisé en ce que

- l'hélice isolante (7") est de configuration creuse, et

- dans l'espace creux de l'hélice (7") est installé au moins un guide optique (11).

6. Montage de guides optiques suivant l'une quelconque des revendications 1 à 5, caractérisé en ce que

- l'hélice isolante (7, 7', 7") est faite d'une matière élastique, et

- en particulier, l'hélice isolante (7, 7', 7") est autoportante.

7. Montage de guides optiques dans un isolateur haute tension (6), en particulier un isolateur destiné à un transformateur de courant d'une installation haute tension pour l'extérieur, comportant au moins un guide optique (11) qui va d'un côté haute tension de l'isolateur haute tension (6) à son côté basse tension, ledit au moins un guide optique (11) étant guidé en hélice le long d'un support de guide optique, caractérisé en ce que

- le support de guide optique présente, le long du guide optique, une distance de fuite superficielle dont la longueur est supérieure à 1,5 fois la hauteur (h) de l'isolateur haute tension (6),
- le support de guide optique a la forme d'un fût d'isolateur (13) en matière plastique renforcée par des fibres de verre,
- ledit au moins un guide optique (11) est noyé dans ce fût d'isolateur (13), et
- est guidé en hélice au moins jusqu'à proximité des deux extrémités (5, 9) de l'isolateur haute tension (6), et
- en particulier, ledit au moins un guide optique (11) est noyé dans une couche extérieure du fût d'isolateur (13).

8. Montage de guides optiques dans un isolateur haute tension (6), en particulier un isolateur destiné à un transformateur de courant d'une installation haute tension pour l'extérieur, comportant au moins un guide optique (11) qui va d'un côté haute tension de l'isolateur haute tension (6) à son côté basse tension, ledit au moins un guide optique (11) étant guidé en hélice le long d'un support de guide optique, caractérisé en ce que
- le support de guide optique présente, le long du guide optique, une distance de fuite superficielle dont la longueur est supérieure à 1,5 fois la hauteur (h) de l'isolateur haute tension (6),
- le support de guide optique a la forme d'une couche de silicone (14) comportant des coupelles en silicone (15) espacées les unes des autres dans le sens vertical ou d'une bande de protection en silicone (14') portant des coupelles en silicone (15), qui entoure un fût d'isolateur (13) en matière plastique renforcée par des fibres de verre de l'isolateur haute tension, et
- entre la paroi extérieure du fût d'isolateur (13) et la couche de silicone (14) ou la bande de protection en silicone (14'), le long du fût d'isolateur (13), au moins un évidement (17) est prévu pour recevoir ledit au moins un guide optique (11).

9. Montage de guides optiques dans un isolateur haute tension (6), en particulier un isolateur destiné à un transformateur de courant d'une installation haute tension pour l'extérieur, comportant au moins un guide optique (11) qui va d'un côté haute tension de l'isolateur haute tension (6) à son côté basse tension, ledit au moins un guide optique (11) étant guidé en hélice le long d'un support de guide optique, caractérisé en ce que
- le support de guide optique présente, le long du guide optique, une distance de fuite superficielle dont la longueur est supérieure à 1,5 fois la hauteur (h) de l'isolateur haute tension (6),
- le support de guide optique a la forme d'une couche de silicone (14) comportant des coupelles en silicone (15) espacées les unes des autres dans le sens vertical ou d'une bande de protection en silicone (14') portant des coupelles en silicone (15), qui entoure un fût d'isolateur (13) en matière plastique renforcée par des fibres de verre de l'isolateur haute tension, et
- au moins un évidement (18) est prévu dans la face inférieure des coupelles en silicone (15), dans lequel au moins un guide optique (11) peut être enfoncé du bas.

100 kV~

h

10

9

8

7

6

5

3

2

1

4

FIG.1

11

7

FIG.2

7'

12

12

11

11

FIG.3

11

11

7"

11

FIG.4

FIG.5

FIG.6

FIG.7

FIG.8

FIG.9

FIG.10

FIG.11